# EUROPÄISCHE PATENTANMELDUNG

(11) **EP 1 128 159 A2**
(43) Veröffentlichungstag der Anmeldung: **29.08.2001**
(21) Anmeldenummer: 01102755.4
(22) Anmeldetag: 08.02.2001
(51) Int. Cl.: G01B 7/30

(54) **Mechanische Welle mit integrierter Magnetanordnung**

(30) Priorität: 22.02.2000 DE 10007968
(71) Anmelder: DaimlerChrysler AG, 70567 Stuttgart (DE)
(72) Erfinder: Fischer, Roland, Dr., 63110 Nidderau (DE); Hoffmann, Klaus, 64342 Seeheim-Jugenheim (DE)
(74) Vertreter: Maute, Hans-Jürgen, Dipl.-Ing.

(57) **Zusammenfassung**

Mechanische Welle (1) mit integrierter Magnetanordnung (8,9) zur Erfassung des Drehwinkels der Welle (1) um ihre Drehachse mit
a) einer kastenförmigen Ausnehmung (3) an der Stirnseite (2) der mechanischen Welle (1),
b) einem länglichen Dauermagneten (9), der am Boden (5) der Ausnehmung (3) angeordnet ist,
c) zwei Polschuhen (8), die an gegenüberliegenden Seiten (4) der kastenförmigen Ausnehmung (3) an den Polen des länglichen Dauermagneten (9) angeordnet sind und formschlüssig mit der Stirmseite (2) der mechanischen Welle (1) abschließen,
d) wobei die zwei Polschuhe (8) mit dem länglichen Dauermagneten (9) eine U-förmige Magnetanordnung (8,9) bilden, in der die Polschuhe (8) die beiden Schenkel und der längliche Dauermagnet (9) das Joch der U-förmigen Magnetanordnung bilden,
so daß in der Ausnehmung (3) zwischen den Polschuhen (8) ein Freiraum (3a) verbleibt, in dem ein gleichförmiges homogenes Magnetfeld (H) mit parallelen Feldlinien herrscht.

## Beschreibung

Die Erfindung betrifft ein Erzeugnis mit den Merkmalen des unabhängigen Anspruchs.

Eine Magnetanordnung zur Bestimmung des Drehwinkels einer mechanischen Welle ist z.B aus dem Patent US 4,810,967 bekannt. Die Magnetanordnung besteht hierbei aus einem magnetischen Ring, der auf eine Welle aufgesteckt wird. Der Magnetring hat auf seinem Umfang eine magnetische Kodierung, die von mindestens einem Magnetfeldsensor abgelesen wird. Da der Magnetring mit seiner magnetischen Codierung auf die Welle aufgesteckt wird trägt er auf der Zylindermatelfläche der Welle auf und bewirkt eine erhebliche örtliche Durchmesservergrößerung des Bauteils bestehend aus Welle und Magnetring am Ort des Magnetrings. Eine derartige Welle kann nur in Vorrichtungen eingebaut werden, bei denen für den zusätzlichen Magnetring genügend Bauraum zur Verfügung steht.

Ein weiterer Nachteil einer Welle mit einer Magnetanordnung wie in der US 4,810,967 liegt in der aufwendigen Codierung des Magnetrings entlang des Umfangs. Die erzielbare Winkelauflösung hängt hierbei von der Feinheit der Codierung und der Anzahl der einzelnen magnetisierten Zonen ab. Je größer die Anzahl der magnetisierten Zonen, je größer ist auch die Winkelauflösung. Eine große Anzahl von magnetisierten Zonen bedeutet jedoch einen großen Ringumfang, mit den bereits erwähnten konstruktiven Nachteilen. Außerdem sind derartige magnetische Maßstabscodierungen aufwendig und teuer.

Ein weiterer Nachteil von mechanischen Wellen, an deren Zylindermantelfläche Maßstabskodierungen angebracht sind, besteht darin, daß die Zylindermantelfläche am Ort der Maßstabskodierung keine Kräfte mehr übertragen kann. Dies bedeutet eine erhebliche konstruktive Einschränkung , wenn z.B. die Zylindermanteloberfläche der Welle mit einer Verzahnung zur Kraftübertragung versehen werden soll.

Erfindungsgemäße Aufgabe ist es daher eine mechanische Welle mit einer integrierten Magnetanordnung vorzuschlagen, die im Zusammenwirkung mit einem Magnetfeldsensor die Bestimmung der Drehwinkellage der Welle erlaubt. Die Magnetanordnung soll hierbei beim Einbau der mechanischen Welle in eine Vorrichtung keinen zusätzlichen konstruktiven Bauraum benötigen und konstruktiv möglichst einfach gehalten werden.

Erfindungsgemäß wird diese Aufgabe gelöst durch die Merkmale des unabhängigen Anspruchs. Weitere vorteilhafte Ausführungsformen sind in den Unteransprüchen enthalten.

Die Lösung gelingt indem ein Dauermagnet, eine nichtmagnetische Abschirmung und mindestens zwei Polschuhe in eine Ausnehmung auf der Stirnseite des Wellenendes eingesetzt wird. Das Magnetfeld des Dauermagneten wird durch eine nichtmagnetische Abschirmung und durch eine spezielle Anordnung von zusätzlichen Polschuhen ausgeformt. Die nichtmagnetische Abschirmung umschließt den Dauermagneten und die Polschuhe kastenförmig mit vier Seitenwänden und einer Bodenplatte und schirmt das Magnetfeld des Dauermagneten gegen den Werkstoff der mechanischen Welle ab. Falls der Werkstoff der mechanischen Welle aus einem nichtmagnetischen Werkstoff gebildet ist, kann auf eine zusätzliche Abschirmung verzichtet werden. In diesem Fall wird die Magnetanordnung aus Dauermagnet und Polschuhen unmittelbar in die Ausnehmung auf der Stirnseite der Welle eingebracht. Die Polschuhe bilden zusammen mit dem länglichen Dauermagneten eine U-förmige Anordnung wobei die Polschuhe die beiden Schenkel dieser U-förmigen Anordnung bilden und der lineare Dauermagnet das verbindende Joch. Hierdurch entsteht zwischen den beiden freien Schenkeln der Polschuhe ein gleichförmiges homogenes Magnetfeld mit sehr guter paralleler Ausrichtung der Feldlinien. Ein richtungsempfindlicher Magnetfeldsensor, der zwischen den freien Schenkeln der Polschuhe ortsfest angebracht ist, erzeugt bei einer Drehbewegung der mechanischen Welle und der damit zwangsweise verbundenen Richtungsänderung des magnetischen Feldes zwischen den Schenkeln der Polschuhe ein sinusförmiges Signal, dessen Wert entsprechend den Kreisfunktionen ein Maß für den Drehwinkel der Welle ist.

Mit der Erfindung werden hauptsächlich die folgenden Vorteile erzielt:

Mit der erfindungsgemäßen mechanischen Welle mit integrierter Magnetanordnung steht eine mechanische Welle zur Verfügung deren Drehwinkel berührungslos erfaßt werden kann. Die erfindungsgemäße mechanische Welle kann besonders vorteilhaft eingesetzt werden, wenn für eine zusätzliche Meßanordnung außerhalb der Welle kein Bauraum zur Verfügung steht. Dies macht die erfindungsgemäße mechanische Welle z.B. besonders geeignet als Bestandteil des Rotors eines Elektromotors oder als Bestandteil eines Zahnradgetriebes. Herkömmliche magnetische Maßstabsanordnungen auf der Zylindermantelfläche einer Antriebswelle würden in der Regel hier eine freie Zylindermantelfläche erfordern, so daß die Welle zur Aufnahme der Maßstabsanordnungen gegenüber einer Antriebswelle ohne Maßstabsanordnungen verlängert werden müßte.

Die Magnetanordnung bei der erfindungsgemäßen mechanischen Welle kann sehr einfach und konstruktiv sehr klein gehalten werden. Hierdurch kann auch die Ausnehmung zur Aufnahme der Magnetanordnung sehr klein gehalten werden. Dies ist besonders vorteilhaft, wenn die Magnetanordnung in die Stirnseite von Antriebswellen eingelassen wird. Die Ausnehmung kann in der Regel klein gegenüber den Dimensionen einer Antriebswelle eines Zahnradbetriebes oder eines starken Elektromotors gehalten werden, so daß die konstruktiven mechanischen Festigkeitswerte der Antriebswelle durch die Ausnehmung kaum beeinflußt werden.

Ausführungsbeispiele der Erfindung werden im folgenden anhand von Zeichnungen dargestellt und näher erläutert. Es zeigen:
- Fig.1: schematisch ein Schnittbild der erfindungsgemäßen mechanischen Welle mit integrierter Magnetanordnung und Magnetfeldsensor
- Fig. 3: schematisch ein Schnittbild der erfindungsgemäßen mechanischen Welle in Seitenansicht und Aufsicht mit angedeutetem Verlauf der Magnetfeldlinien,

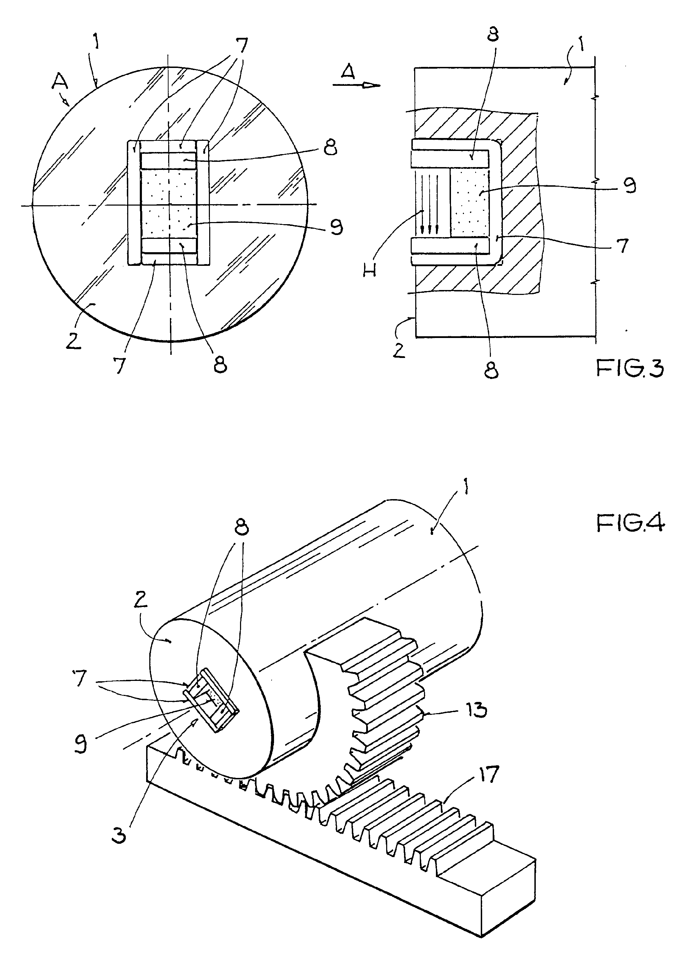

- Fig. 2: Einen Vergleich des tatsächlich gemessenen Sensorsignals mit dem idealerweise theoretisch zu erwartenden Signal in Abhängigkeit vom Drehwinkel der mechanischen Welle
- Fig. 4: eine mögliche Anwendung der erfindungsgemäßen Welle in einem Zahnantrieb z.B. als Lenkgetriebe in einem Kraftfahrzeug

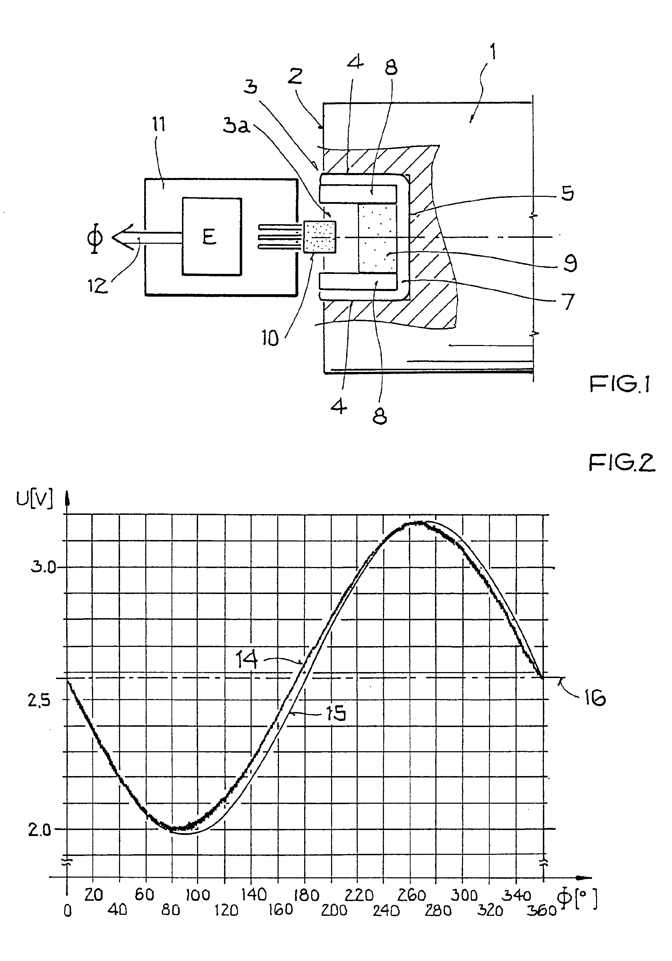

Fig.1 zeigt schematisch ein Schnittbild der erfindungsgemäßen mechanischen Welle mit integrierter Magnetanordnung und Magnetfeldsensor. In einer mechanischen Welle 1, die in dem Ausführungsbeispiel aus einem ferromagnetischen handelsüblichen Baustahl gebildet ist, ist an der Stirnseite 2 des Wellenendes eine Ausnehmung 3 eingebracht. Die Ausnehmung ist vorzugsweise kastenförmig und von länglicher Gestalt. Typische Abmessungen der Ausnehmung bewegen sich
- für die Länge der Ausnehmung im Bereich von 5 bis 20 mm, bevorzugterweise im Bereich von 10 bis 15 mm,
- für die Breite der Ausnehmung im Bereich von 2 bis 10 mm, bevorzugterweise im Bereich von 4 bis 7 mm,
- für die Tiefe der Ausnehmung im Bereich von 5 bis 15 mm, bevorzugterweise im Bereich von 7 bis 12 mm.

Die Ausnehmung ist an den Seiten 4 und an dem Boden 5 mit einem Kupferblech 7 vollständig ausgekleidet. An der oberen und unteren Seite der ausgekleideten Ausnehmung sind zwei quaderförmige Polschuhe 8 angeordnet. Die Polschuhe schließen mit der Oberfläche der Stirnseite des Wellenendes formschlüssig ab und reichen bis zum Boden der ausgekleideten kastenförmigen Ausnehmung. Die Polschuhe sind aus einem ferromagnetischen Werkstoff gebildet, der in der Lage ist magnetische Feldlinien gut zu leiten und zu verstärken. Die Polschuhe sind deshalb aus einem Werkstoff mit einer relativen magnetischen Permeabilität µ_{R} größer als 1 gebildet. Vorzugsweise sind die Polschuhe aus einem Magnetwerkstoff wie z.B. Hyperm 900. Hyperm 900 ist die Warenbezeichnung für einen ferromagnetischen Werkstoff mit einem Nickelanteil von 70-80 %, der eine maximale relative Permeabilität von 180000 erreicht. In dem Ausführungsbeispiel wurden die Polschuhe aus einem handelsüblichen Baustahl gebildet der eine relative Permeabilität von typischerweise 2000 hat. Zwischen den Polschuhen 8 ist ein länglicher Stabmagnet 9 angeordnet. Der Stabmagnet ist als Dauermagnet ausgebildet und vorzugsweise aus einem hartmagnetischen Werkstoff mit hoher Koerzitivfeldstärke. In dem Ausführungsbeispiel wurde der Stabmagnet aus einem NdFeB-Stabmagneten (Neodym-Eisen-Bor-Stabmagnet) gebildet. Es sind jedoch auch andere hartmagnetische Werkstoffe für den Stabmagneten denkbar. Wichtig ist, daß die Werkstoffe in der Lage sind ein starkes Magnetfeld zu bilden ( magnetische Permeabilität sehr groß gegen 1) und das starke Magnetfeld gegen Umpolung oder Abschwächung aufrechterhalten können ( große Koerzitivfeldstäke).

Die beiden Polschuhe 8 und der Dauermagnet 9 bilden in der ausgekleideten kastenförmigen Ausnehmung 3 eine U-förmige Anordnung, bei der die beiden Polschuhe 8 die Schenkel der U-förmigen Anordnung und der Dauermagnet 9 das Joch der U-förmigen Anordnung bilden. Diese U-förmige Magnetanordnung ist in der Ausnehmung 3 derart angeordnet, daß der Dauermagnet 9 am Boden 5 der Ausnehmung zu liegen kommt, so daß die Schenkel der U-förmigen Anordnung zur Stirnseite 2 des Wellenendes zeigen. Hierdurch verbleibt in der Ausnehmung 3 ein nichtausgefüllter ebenfalls kastenförmiger Freiraum 3a. In diesem Freiraum 3a ist ein ortsfester handelsüblicher Magnetfeldsensor 10 angeordnet, der in der Lage ist, eine Richtungsänderung des Magnetfeldes zwischen den beiden Polschuhen 8 zu detektieren. Es können hierbei verschiedene sogenannte magnetische Drehwinkelsensoren eingesetzt werden. Der Magnetfeldsensor 10 ist ortsfest auf einer Halterung 11 befestigt. Auf dieser Halterung 11 befindet sich ebenfalls eine elktronische Einheit E zur Energieversorgung des eigentlichen Sensors und zur Auswertung der Sensorsignale sowie zu deren Umrechnung in einen Drehwinkel Φ, als Maß für den Drehwinkel der mechanischen Welle 1 gegenüber dem Magnetfeldsensor 10 und der Halterung 11. Vorzugsweise verfügt die Elektronikeinheit E über einen digitalen Ausgang 12, der in Fig. 1 schematisch als Doppelpfeil dargestellt ist. An dem Ausgang 12 wird je nach vorgesehener Anwendung der Drehwinkel zur weiteren Verarbeitung durch z. B. ein nachfolgendes Anzeigegerät, oder ein Steuergerät oder eine sonstige Datenverarbeitung zur Verfügung gestellt. In dem Ausführungsbeispiel wurde als Magetfeldsensor ein handelsüblicher Hallsensor, wie er z.B. von der Firma Intermetall hergestellt wird, eingesetzt.

Die einzelnen vorbeschriebenen Komponenten wirken funktionell folgendermaßen zusammen. Der Dauermagnet 9 fungiert als Winkelgeber, der in die mechanische Welle 1 mit sehr geringem Aufwand, ohne die mechanische Belastbarkeit der Welle zu beeinträchtigen, integriert ist. Die Polschuhe 8 formen das Magnetfeld des Dauermagneten derart, daß zwischen den beiden Polschuhe im Freiraum 3a ein lokal eng begrenztes Magnetfeld guter Homogenität und idealerweise gleichförmiger paralleler Ausrichtung der Feldlinien entsteht. Diese Magnetanordnung aus Polschuhen 8 und Dauermagneten 9 ist umgeben von einer nichtmagnetischen Hülle aus beispielsweise 1 mm starkem Kupferblech. Durch die Kupferumhüllung wird erreicht, daß das Magnetfeld zwischen den Polschuhen die zur Detektion notwendige Stärke behält. Ohne diese Umhüllung würden sich die Magnetfeldlinien bereits im ferromagnetischen Wellenende 2 schließen, so daß zwischen den Polschuhen kein Feld brauchbarer Stärke und Homogenität meßbar ist. Die Homogenität des auf diese Weise erzeugten Feldes ist beachtlich.

In Fig. 2 ist ein Vergleich des tatsächlichen mit der erfindungsgemäßen Anordnung gemessenen Signalverlaufs und dem theoretischen Signalverlauf gezeigt. Bei idealer Gleichförmigkeit des Magnetfeldes sollte bei einer Drehung der Welle um einen Vollwinkel von 360° ein idealer Sinus gemessen werden. Das mit einem unbedeutenden Rauschen behaftete tatsächliche Signalverlauf des eingesetzten Hallsensors ist mit der Ziffer 14 bezeichnet und über dem Drehwinkel Φ in der Einheit ° aufgetragen. Die Hallspannung des Hallsensors ist in der Einheit Volt (V) aufgetragen. Mit der gestrichelten Linie 16 ist die sogenannte Nullinduktionsspannung, die für die verwendete Magnetfeldsensorik auf 2,6 V eingestellt war in das Schaubild eingetragen. Um die ausgezeichnete Qualität des mit der erfindungsgemäßen Magnetanordnung gemessenen Signalverlaufs 14 besser beurteilen zu können, ist in das Schaubild eine ideale rechnerisch bestimmte Sinuskurve 15 eingetragen, die den idealerweise möglichen Signalverlauf wiedergibt. Es ergibt sich eine ausgezeichnete Übereinstimmung zwischen tatsächlichem Signalverlauf und idealerweise möglichem Signalverlauf.

Bei Einsatz weniger stark belasteter Wellen aus nichtmagnetischen Werkstoffen, kann auf eine Kupferumhüllung verzichtet werden. Der übrige Aufbau bleibt mit dem in Fig. 1 gezeigten Aufbau identisch.

Fig. 3 zeigt nochmals zur weiteren Erläuterung eine erfindungsgemäßes mechanisches Wellenende 1 ohne die Sensoranordnung aus Fig. 1. Jedoch mit dem symbolisch mittels Pfeilen dargestellten homogenen Magnetfeld H zwischen den Polschuhen 8. Weiterhin ist eine Teilansicht A als Aufsicht auf die Stirnseite des Wellendes dargestellt. In der Aufsicht ist nochmals zur Verdeutlichung die nichtmagnetische Umhüllung 7 der kastenförmigen Ausnehmung des Wellenendes gezeigt.

Fig. 4 zeigt beispielhaft eine mögliche Anwendung der erfindungsgemäßen mechanischen Welle mit integrierter Magnetanordnung . Die Anordnung muß noch gedanklich durch die in Fig. 1 gezeigte Magnetfeldsensorik samt zugehöriger Halterung ergänzt werden. Die Magnetfeldsensorik und die zugehöriger Halterung wurden in Fig. 4 aus Gründen der Übersichtlichkeit weggelassen. Ein Grundmodul zur mechanischen Kraftübertragung wie es beispielhaft in Fig. 4 gezeigt ist, verdeutlicht die vielfältigen Anwendungsmöglichkeiten einer mechanischen Welle mit integrierter Magnetfeldanordnung und zugehöriger Drehwinkelsensorik.

Fig 4 zeigt ein Grundmodul zur mechanischen Kraftübertragung aus einer mechanischen Welle 1 an deren einem Wellenende in der Stirnseite 2 in einer Ausnehmung 3 eine Magnetanordnung ,8,9 wie in Fig. 1 und 3 gezeigt aus Polschuhen 8 und Dauermagnet 9 angebracht ist. Weiterhin ist an der Welle mindestens ein Zahnradsegment 13 angebracht, das mit mindestens einem weiteren Zahnsegment 17 in Wirkverbindung ist. Wird die Welle 1 z. B. durch einen Motor gedreht, dann wird die Drehbewegung durch das Zahnradsegment 13 auf das Zahnsegment 17 übertragen und bewirkt dort ebenfalls eine Bewegung. Wenn das Zahnsegment 17 als Zahnstange ausgebildet ist und das Zahnradsegment 12 als komplettes Zahnrad ausgebildet ist, kann mit einem derartigen Grundmodul eine Drehbewegung der mechanischen Welle 1 in eine Linearbewegung der Zahnstange umgesetzt werden. Bei gleichzeitiger Erfassung des Drehwinkels kann damit bei bekanntem Übersetzungsverhältnis des Zahnantriebs aus der Drehbewegung der mechanischen Welle der Verstellweg der Zahnstange bestimmt werden. Zusammen mit der in Fig. 1 gezeigten Magnetfeldsensorik steht mit dem Grundmodul damit ein steuerbares und/oder regelbares mechatronisches Element zur Verfügung. Hierzu bedarf es lediglich noch eines steuerbaren herkömmlichen Elektromotors, der die mechanische Welle in Abhängigkeit eines Steuersignals steuert und entsprechend des gemäß der Erfindung erfaßten Drehwinkels regelt. Anwendungen für die mechanische Welle mit integrierter Magnetanordnung sowie für das in Fig. 4 gezeigte Grundmodul liegen beispielsweise bei Kraftfahrzeugen in sogenannten Drive-by-wire-Systemen, bei denen die mechanischen Lenkgetriebe durch intelligente elektromechanische Aktoren ersetzt sind.

## Patentansprüche

1. Mechanische Welle (1) mit integrierter Magnetanordnung (8,9) zur Erfassung des Drehwinkels der Welle (1) um ihre Drehachse mit
a) einer kastenförmigen Ausnehmung (3) an der Stirnseite (2) der mechanischen Welle (1),
b) einem länglichen Dauermagneten (9), der am Boden (5) der Ausnehmung (3) angeordnet ist,
c) zwei Polschuhen (8), die an gegenüberliegenden Seiten (4) der kastenförmigen Ausnehmung (3) an den Polen des länglichen Dauermagneten (9) angeordnet sind und formschlüssig mit der Stirmseite (2) der mechanischen Welle (1) abschließen,
d) wobei die zwei Polschuhe (8) mit dem länglichen Dauermagneten (9) eine U-förmige Magnetanordnung (8,9) bilden, in der die Polschuhe (8) die beiden Schenkel und der längliche Dauermagnet (9) das Joch der U-förmigen Magnetanordnung bilden,
e) so daß in der Ausnehmung (3) zwischen den Polschuhen (8) ein Freiraum (3a) verbleibt, in dem ein gleichförmiges homogenes Magnetfeld (H) mit parallelen Feldlinien herrscht.

2. Erzeugnis nach Anspruch 1, dadurch gekennzeichnet, daß in der Ausnehmung eine zusätzliche nichtmagnetische Abschirmung (7) angeordnet ist, die die Magnetanordnung (8,9) magnetisch gegen die mechanische Welle (1) abschirmt.

3. Grundmodul zur mechanischen Kraftübertragung mit einer mechanischen Welle (1) nach einem der Ansprüche 1 oder 2 an die mindestens ein Zahnradsegment (13) angebracht ist, das in Wirkverbindung mit einem einem Zahnsegment (17) ist.

4. Grundmodul nach Anspruch 3, dadurch gekennzeichnet, daß das Zahnradsegment (13) als komplettes Zahnrad ausgebildet ist.

5. Grundmodul nach Anspruch 3, dadurch gekennzeichnet, daß das Zahnsegment (17) als Zahnstange ausgebildet ist.

6. Vorrichtung zur Erfassung des Drehwinkels einer mechanischen Welle (1) nach einem der Ansprüche 1 oder 2 mit
a) mindestens einem Magnetfeldsensor (10) der ortsfest auf einer Halterung (11) angebracht ist und in den Freiraum (3a) hineinragt,
b) mit einer elektronischen Einheit (E) die mit dem Magnetfeldsensor (10) verbunden ist und die den Magnetfeldsensor mit Energie versorgt und die die Sensorsignale des Magnetfeldsensors erfaßt und in einen Drehwinkel (Φ) als Maß für den Drehwinkel der mechanischen Welle (1) gegenüber dem Magentfeldsensor (10) umrechnet.

7. Vorrichtung zur Erfassung des Drehwinkels einer mechanischen Welle (1) eines Grundmoduls nach einem der Ansprüche 3 oder 4 mit
a) mindestens einem Magnetfeldsensor (10) der ortsfest auf einer Halterung (11) angebracht ist und in den Freiraum (3a) hineinragt,
b) mit einer elektronischen Einheit (E) die mit dem Magnetfeldsensor (10) verbunden ist und die den Magnetfeldsensor mit Energie versorgt und die die Sensorsignale des Magnetfeldsensors erfaßt und in einen Drehwinkel (Φ) als Maß für den Drehwinkel der mechanischen Welle (1) gegenüber dem Magentfeldsensor (10) umrechnet.

8. Vorrichtung nach einem der Ansprüche 3 bis 7, dadurch gekennzeichnet, daß der Magnetfeldsensor ein Hallsensor ist.

9. Verwendung der Vorrichtung nach einem der Ansprüche 3 bis 8 in einem elktromechanischen Aktor.

10. Verwendung der Vorrichtung nach einem der Ansprüche 3 bis 7 in einem mechanischen Lenkgetriebe.
